# EUROPÄISCHE PATENTANMELDUNG

(11) **EP 0 982 686 A1**
(43) Veröffentlichungstag der Anmeldung: **01.03.2000**
(21) Anmeldenummer: 99113194.7
(22) Anmeldetag: 08.07.1999
(51) Int. Cl.: G07B 15/02

(54) **Benutzungsgebührenkassiervorrichtung für eine Einrichtung**

(30) Priorität: 28.08.1998 DE 29815412 U
(71) Anmelder: Schulte-Schlagbaum Aktiengesellschaft, D-42553 Velbert (DE)
(72) Erfinder: Bonikowski Michael, D-45701 Berten (DE); Engelbach Martin, D-42283 Wuppertal (DE)
(74) Vertreter: Grundmann, Dirk, Dr.

(57) **Zusammenfassung**

Die Erfindung betrifft eine Benutzungsgebührenkassiervorrichtung für eine Einrichtung wie Schwimmbad, Parkgarage oder dergleichen, welche Vorrichtung mindestens eine Ausgabeeinheit zur Ausgabe eines karten- oder münzförmigen Datenträgers, auf welchem neben einer Information über den Ausgabezeitpunkt oder -ort auch weitere von der Ausgabeeinheit lesbare Informationen gespeichert sind, eine Rücknahmeeinheit zur Rücknahme der Datenträger, welche ebenfalls in der Lage ist, diese Informationen zu lesen, und eine Vielzahl von in ihrer Umrißform gleich gestalteten Datenträger aufweist. Zur Vergrößerung des Einsatzbereiches ist vorgesehen, daß die Vielzahl der Datenträger mehrere Gruppen ausbildet, wobei die Datenträger einer Gruppe äußerlich formgleich gestaltet sind, sich aber von den Datenträgern aller anderen Gruppen optisch erkennbar unterscheiden.

## Beschreibung

Die Erfindung betrifft eine Benutzungsgebührenkassiervorrichtung für eine Einrichtung wie Schwimmbad, Parkgarage oder dergleichen, welche Vorrichtung mindestens eine Ausgabeeinheit zur Ausgabe eines karten- oder münzförmigen Datenträger, auf welchen neben einer Information über den Ausgabezeitpunkt auch weitere Informationen äußerlich unsichtbar, aber von der Ausgabeeinheit lesbar gespeichert sind, eine Rücknahmeeinheit zur Rücknahme der Datenträger und eine Vielzahl von in ihrer Umrißform gleich gestalteten Datenträgern aufweist.

Derartige Benutzungsgebührenkassiervorrichtungen kommen dort zum Einsatz, wo die Benutzung einer Einrichtung für eine gewisse Zeit einer Person oder einen Kraftwagen zur Verfügung gestellt wird. Beim Betreten oder Befahren der Einheit muß der Benutzer die Ausgabeeinheit passieren und erhält von der Ausgabeeinheit einen Datenträger. Dieser Datenträger kann die Form einer Karte oder einer Münze besitzen. Der Datenträger trägt Daten, die Informationen über den Ausgabezeitpunkt, also über den Zeitpunkt, an welchen der Benutzer die Einrichtung betreten hat, enthält. Die Zeitinformation kann dabei entweder der exakte Ausgabezeitpunkt sein oder ein vorausberechneter Rückgabezeitpunkt. Zusätzlich trägt der Datenträger noch Informationen über den Tarif oder beispielsweise das Datum.

Der Erfindung liegt die Aufgabe zugrunde, eine gattungsgemäße Benutzungsgebührenkassiervorrichtung dahingehend weiterzubilden, daß deren Einsatzspektrum vergrößert ist.

Gelöst wird die Aufgabe dadurch, daß die Vielzahl der Datenträger mehrere Gruppen ausbildet, wobei die Datenträger einer Gruppe äußerlich gleich gestaltet sind, sich aber von den Datenträgern aller anderen Gruppen optisch erkennbar unterscheiden. Hierdurch ist es möglich, eine Benutzungagebührenkassiervorrichtung für zwei Einrichtungen zur Verfügung zu stellen. Die Ausgabevorrichtung besitzt hierzu beispielsweise einen Wahlschalter, mit dem zwischen mehreren Einrichtungen gewählt werden kann. Abhängig von der Wahl gibt die Ausgabevorrichtung dann einen Datenträger ab, der einer bestimmten Gruppe zugehörig ist. Die Datenträger verschiedener Gruppen sind äußerlich voneinander durch Farbgebung oder dergleichen unterscheidbar. Die Vorrichtung läßt sich auch bei einer einzigen Einrichtung in vorteilhafter Weise verwenden, wenn dort beispielsweise mehrere Tarifgruppen vorgesehen sind, beispielsweise an einem Schwimmbad, bei dem mehrere insbesondere altersbezogene Tarife (beispielsweise Seniorentarif, Normaltarif, Studententarif, Schülertarif, Kindertarif) vorgesehen sind. Dann wird jeder Tarifgruppe eine bestimmte Datenträgergruppe zugeordnet. Der Bademeister ist dann in der Lage, ohne den maschinenlesbaren Inhalt des Datenträgers lesen zu müssen, durch einfaches Hinsehen Aufschluß darüber zu erhalten, ob der jeweilige Benutzer den richtigen Tarif gewählt hat. In einer vorteilhaften Ausgestaltung unterscheiden sich die Datenträger der verschiedenen Gruppen dadurch, daß sie eine andere Farbe besitzen. Es ist aber auch vorgesehen, daß die Datenträger der verschiedenen Gruppen gruppenspezifische Motive tragen, beispielweise mit derartigen Motiven bedruckt sind. Als Datenträger kommen vorzugsweise mit jeweils einem Transponder versehene Münzen in Betracht. Es ist insbesondere von Vorteil, wenn die Datenträger wieder beschrieben werden können.

Die Ausgabevorrichtung der erfindungsgemäßen Benutzungsgebührenkassiervorrichtung besitzt in vorteilhafter Weise einen Wahlschalter, mit welchen die Gruppe des auszugebenden Datenträgers gewählt werden kann. Entsprechender der Gruppenauswahl wird dann an der Ausgabevorrichtung ein Preis angezeigt. Wird dieser Preis bezahlt, so erfolgt die Abgabe. Die Anwendung derartiger Benutzungsgebührenkassiervorrichtung ist nicht nur auf Einrichtungen wie Schwimmbad, Parkgarage oder dergleichen beschränkt, bei welcher die Benutzungszeit gebührenrelevant ist. Es ist auch denkbar, diese Benutzungsgebührenkassiervorrichtung im Personenbeförderungswesen anzuwenden, um Fahrkarten oder- münzen abzugeben. Dann wird auf dem Datenträger als relevantes Datum beispielsweise der Ausgabeort gespeichert. Neben dem Ausgabeort kann auch dort der Zielort gespeichert werden. Es ist dann von Vorteil, wenn das optisch unterscheidbare Datum eine Klartextangabe über den Zielort ist.

Die erfinderische Benutzungsgebührenkassiervorrichtung kann nicht nur eine Ausgabeeinheit, sondern eine Vielzahl von Ausgabeeinheiten aufweisen. Ebenso ist es möglich, nicht nur eine Rücknahmeeinheit, sondern eine Vielzahl von Rücknahmeeinheiten zu verwenden. Die von den Ausgabeeinheiten oder Rücknahmeeinheiten verwendeten Datenträger sind alle körperlich gleich gestaltet, bzw. so gestaltet, daß sie von allen Maschinen gelesen werden können.

Die Rücknahmeeinheit kann so ausgebildet sein, daß sie mit einer Sperre verbunden ist. Diese Sperre öffnet nur, wenn auf dem Datenträger ein gültiges Datum gespeichert ist. Beispielsweise läßt die Sperre den die Rücknahmeeinheit betätigenden Benutzer durch, wenn der tarifmäßige Zeitraum bei einer Anwendung in einem Schwimmbad oder einer Parkgarage nicht überschritten wurde. Ist der tarifmäßige Zeitraum überschritten, so fordert die Rücknahmeeinrichtung den Benutzer zur Nachzahlung auf. Bei der Anwendung der Rücknahmeeinheit beim Personenverkehr kann ebenfalls eine Sperre vorgesehen sein, die den Benutzer das Passieren erlaubt, wenn der Benutzer einen Streckenbereich gereist ist, für den er den tarifmäßigen Preis gezahlt hat.

Alle offenbarten Merkmale dieser Anmeldung sind erfindungswesentlich. In die Offenlegung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung aufzunehmen.

## Patentansprüche

1. Benutzungsgebührenkassiervorrichtung für eine Einrichtung wie Schwimmbad, Parkgarage oder dergleichen, welche Vorrichtung mindestens eine Ausgabeeinheit zur Ausgabe eines karten- oder münzförmigen Datenträgers, auf welchem neben einer Information über den Ausgabezeitpunkt oder -ort auch weitere von der Ausgabeeinheit lesbare Informationen gespeichert sind, eine Rücknahmeeinheit zur Rücknahme der Datenträger, welche ebenfalls in der Lage ist, diese Informationen zu lesen, und eine Vielzahl von in ihrer Umrißform gleich gestalteten Datenträger aufweist, dadurch gekennzeichnet, daß die Vielzahl der Datenträger mehrere Gruppen ausbildet, wobei die Datenträger einer Gruppe äußerlich formgleich gestaltet sind, sich aber von den Datenträgern aller anderen Gruppen optisch erkennbar unterscheiden.

2. Benutzungsgebührenkassiervorrichtung nach Anspruch 1 oder insbesondere danach, dadurch gekennzeichnet, daß die Datenträger Transponder sind.

3. Benutzungsgebührenkassiervorrichtung nach einem oder mehreren der vorhergehenden Ansprüche oder insbesondere danach, dadurch gekennzeichnet, daß die Datenträger wieder beschreibbar sind.

4. Benutzungsgebührenkassiervorrichtung nach einem oder mehreren der vorhergehenden Ansprüche oder insbesondere danach, dadurch gekennzeichnet, daß die Gruppen sich durch eine Andersfarbigkeit unterscheiden.

5. Benutzungsgebührkassiervorrichtung nach einem oder mehreren der vorhergehenden Ansprüche oder insbesondere danach, dadurch gekennzeichnet, daß jede Gruppe ein charakteristisches Motiv besitzt bzw. mit einem charakteristischen Motiv bedruckt ist.

6. Benutzungsgebührenkassiervorrichtung nach einem oder mehreren der vorhergehenden Ansprüche oder insbesondere danach, dadurch gekennzeichnet, daß jede Gruppe einer Tarifgruppe zugeordnet ist.

7. Benutzungsgebührenkassiervorrichtung nach einem oder mehreren der vorhergehenden Ansprüche oder insbesondere danach, dadurch gekennzeichnet, daß jede Gruppe einem bestimmten räumlichen Bereich der Einrichtung zugeordnet ist.

8. Benutzungsgebührenkassiervorrichtung nach einem oder mehreren der vorhergehenden Ansprüche oder insbesondere danach, dadurch gekennzeichnet, daß die Ausgabevorrichtung wahlweise einen Datenträger einer bestimmten Gruppe ausgibt.
